# EUROPÄISCHE PATENTSCHRIFT

(11) **EP 2 259 953 B1**
(45) Veröffentlichungstag und Bekanntmachung des Hinweises auf die Patenterteilung: **14.11.2012**
(21) Anmeldenummer: 08873347.2
(22) Anmeldetag: 17.11.2008
(51) Int. Cl.: B60S 1/08

(54) **VORRICHTUNG ZUR BESTIMMUNG DER REFLEXIONSEIGENSCHAFTEN EINER GRENZFLÄCHE MIT VERBESSERTER FREMDLICHTUNTERDRÜCKUNG**
DEVICE FOR DETERMINING THE REFLECTION PROPERTIES OF A BOUNDARY SURFACE WITH IMPROVED STRAY LIGHT SUPPRESSION
DISPOSITIF DE DÉTERMINATION DES PROPRIÉTÉS DE RÉFLEXION D'UNE INTERFACE AVEC ATTÉNUATION AMÉLIORÉE DES LUMIÈRES PARASITES

(30) Priorität: 11.03.2008 DE 102008000599
(43) Veröffentlichungstag der Anmeldung: 15.12.2010
(73) Patentinhaber: Robert Bosch GmbH, 70442 Stuttgart (DE)
(72) Erfinder: FEILER, Wolfgang, 72766 Reutlingen (DE); WOLFF, Markus, 72555 Metzingen (DE)
(86) Internationale Anmeldenummer: PCT/EP2008/065685
(87) Internationale Veröffentlichungsnummer: WO 2009/112096

(56) Entgegenhaltungen:
- US-A- 4 960 996
- US-A- 4 973 844

## Beschreibung

### Stand der Technik

Die Erfindung betrifft eine Vorrichtung zur Bestimmung der Reflexionseigenschaften einer Grenzfläche, wie sie beispielsweise in einer Optik für einen optischen Sensor wie z. B. einem Regensensor Verwendung finden kann.

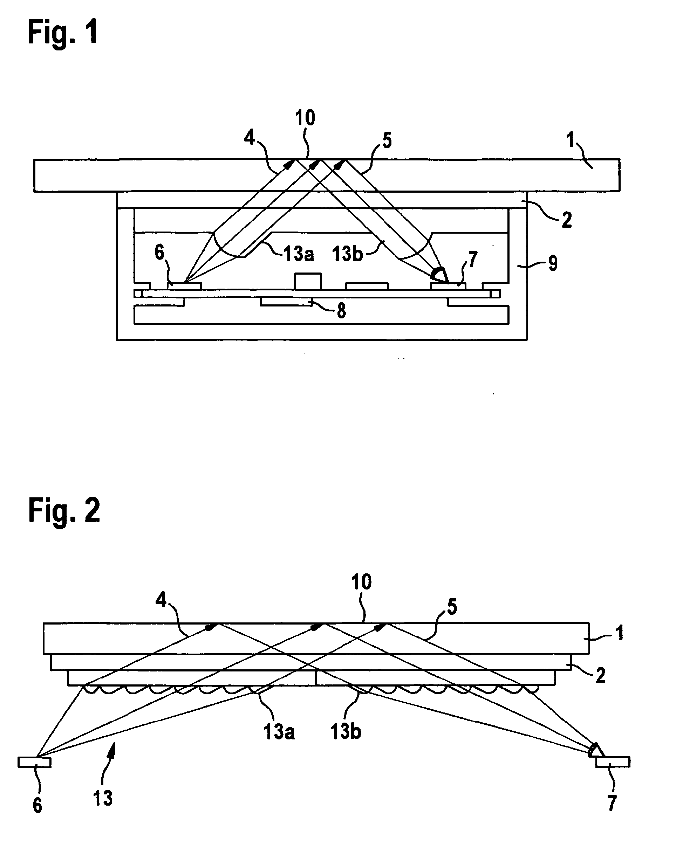

Aus dem Stand der Technik sind Regensensoren bekannt, die im allgemeinen nach dem in Figur 1 dargestellten Prinzip arbeiten:
Eine elektromagnetische Strahlungsquelle 6 wie beispielsweise eine Infrarot-LED sendet elektromagnetische Strahlung 4 unter einem bestimmten Winkel von der Innenseite einer Scheibe 1 her, also üblicherweise vom Fahrgastraum eines Kraftfahrzeuges aus, in Richtung der Scheibe 1. Die Strahlung 4 passiert die Grenzfläche zwischen Innenraum und Scheibe 1 und wird gegen die von Scheibe 1 und dem Fahrzeugäußeren gebildete Grenzfläche 10 gelenkt, die in diesem Bereich als sensitive Fläche bezeichnet wird. Der Einfallswinkel der elektromagnetischen Strahlung 4 gegenüber der Grenzfläche 10 ist dabei so gewählt, dass die elektromagnetische Strahlung 4 bei einer nicht beispielsweise durch Regentropfen benetzten Scheibe 1 an der Grenzfläche 10 nach den Gesetzen der Optik in Richtung der Innenseite der Scheibe 1 als reflektierte Strahlung 5 totalreflektiert wird und von einem in der Nähe der Scheibeninnenseite angeordneten beispielsweise als Infrarot-LRD ausgebildeten Empfänger 7 detektiert wird. Bei einer Benetzung der Scheibe 1 wird diese Totalreflexion aufgrund der geänderten Brechzahlverhältnisse an der Grenzfläche 10 gestört bzw. aufgehoben, so dass ein Teil der elektromagnetischen Strahlung 4 nach außen ausgekoppelt wird und an der LRD 7 weniger Strahlung als im Falle der Totalreflexion ankommt. Aus dem Einbruch des Lichteinfalls schließt eine der LED 6 und LRD 7 zugeordnete, z.B. auf einer Leiterplatte angeordnete Auswerteeinheit 8 auf den vorliegenden Benetzungsgrad und steuert entsprechend Wischvorgänge des Scheibenwischers. Um dieses Grundprinzip zu realisieren, sind LED 6, LRD 7 und die Auswerteeinheit 8 zusammen mit einem nicht dargestellten Steuergerät in einem Gehäuse 9 untergebracht, das zum Zwecke der effektiven Lichtstrahlführung mit einer der LED 6 zugeordneten Einkoppeloptik 13a und einer der LRD 7 zugeordneten Auskoppeloptik 13b ausgerüstet ist und zum Zwecke der ungestörten Lichtleitung und Einkopplung der Strahlung 4 bzw. 5 in die bzw. aus der Scheibe 1 mit einem optischen Koppelmedium als Zwischenschicht 2, z.B. aus Silikon, luftblasenfrei an die Scheibe 1 angekoppelt ist. Die genannten Einkoppel- bzw. Auskoppeloptiken 13a, 13b bestehen dabei üblicherweise aus Linsen, deren eine Seite konvex und deren andere Seite plan ist.

Regensensoren der zuvor geschilderten Ausführungsform sind beispielsweise in der deutschen Patentanmeldung DE 102 61 244 A1, in der europäischen Patentanmeldung EP 0 997 360 A2 sowie in der internationalen Patentanmeldung mit der Veröffentlichungsnummer PCT/US98/20881 beschrieben. Die Auslegung der Optik bedingt jedoch, dass die elektromagnetische Strahlungsquelle und der Empfänger lateral (d.h. parallel zur Scheibe) in einem größeren Abstand als die Einkoppel- bzw. die Auskoppeloptiken selbst angeordnet sind.

Aus der deutschen Patentanmeldung DE 198 30 120A1 ist die in Figur 2 dargestellte Optikanordnung 13 bekannt, die jeweils segmentierte Linsen 13a und 13b, sogenannte Fresnel-Linsen, zur Strahlführung für eine LED 6 und eine LRD 7 verwendet, wobei beide Linsen identisch ausgeführt sind. Die in der genannten Anmeldung beschriebenen Fresnel-Linsen 13a, 13b sind dabei in der Weise angeordnet, dass die optische Achse der Linsen in einem Winkel von ca. 45° zu der Scheibenoberfläche orientiert ist und ausschließlich Brechung zur Ablenkung der elektromagnetischen Strahlung 4 bzw. 5 verwendet wird. Als Konsequenz sind LED 6 und LRD 7 lateral außerhalb der Berandung des Fresnel-Linsenbereiches angeordnet.

Die gattungsbildende US 4,960,996 offenbart einen Regensensor mit einem Emitter, einem Detektor und einem Referenzdetektor, der Umgebungslicht und Emitterstrahlung empfängt, die parallel zu der Ausgangsrichtung ist.

US 4,973,844 offenbart einen Feuchtigkeitssensor für ein Fahrzeug umfassend gestapelte Reihen von Infrarodenergie emittierende Dioden und gestapelte Sensoren.

### Vorteile der Erfindung

Vorteilhaft ist es, die optische Regensensorvorrichtung um eine Blende zu ergänzen, die im Weg der Nutzstrahlung von der Strahlungsquelle zur Empfangseinrichtung in der Weise angeordnet ist, dass die Empfangseinrichtung nahezu ausschließlich von Nutzstrahlung erreicht werden kann, die nach dem Eintritt in die Fahrzeugscheibe an der Außenfläche in Richtung der Empfangseinrichtung reflektiert wird; ein gewisser Restfehler im Bereich weniger Prozent der in die Empfängereinrichtung einfallenden Strahlung ist hierbei zulässig. Auf diese Weise wird ein Lichtweg geschaffen, der das Eindringen von störender optischer Strahlung, durch welche die Messergebnisse des Regensensors verfälscht werden könnte, weitgehend unterbindet. Die Blende kann dabei in vorteilhafter Weise aus einer Mehrzahl einzelner Blendenlamellen aus optisch intransparentem Material gebildet sein; dabei bedeutet optisch intransparent, dass das gewählte Material für die von der Strahlungsquelle emittierte elektromagnetische Nutrstrahlung nicht transparent ist.

Vorteilhaft ist es weiterhin, wenn die Oberflächen der Blendenlamellen parallel zur Richtung der optischen Nutzstrahlung ausgerichtet sind und sich die Blendenlamellen in einer von der Richtung der Nutzstrahlung abweichenden Richtung wenigstens teilsweise überdecken.

Zur Erhöhung der mechanischen Stabilität der Blende können die einzelnen Blendenlamellen miteinander durch Stege verbunden sein.

Die Blende kann senkrecht zur Richtung der Nutzstrahlung und parallel zur Außenfläche eine variierende oder auch eine konstante Querschnittsgeometrie zeigen. Ferner ist es vorteilhaft, wenn die Blende in eine Zwischenschicht aus einem optischen Koppelmedium integriert ist; hierdurch stabilisieren sich die Blende und die Zwischenschicht mechanisch gegenseitig.

Es ist nicht erforderlich, die Blende in dem gesamten Bereich der Regensensorvorrichtung anzuordnen; es genügt vielmehr, wenn die Blende lediglich in dem Bereich der Regensensorvorrichtung angeordnet ist, der von der an der Außenfläche der Fahrzeugscheibe reflektierten Strahlung durchtreten wird, also auf der Empfängerseite der Anordnung. Alternativ ist es auch möglich, die erfindungsgemäße Blende lediglich auf der Sendeseite der Anordnung, also auf dem Lichtweg von der Strahlungsquelle bis zur Außenfläche der Fahrzeugscheibe anzuordnen.

### Kurzbeschreibung der Zeichnung

Nachfolgend werden Ausführungsbeispiele der Erfindung anhand der Zeichnung erläutert.

Es zeigen:
- Figur 1: die prinzipielle Funktionsweise von Regensensoren nach dem Stand der Technik;
- Figur 2: einen Regensensor nach dem Stand der Technik, bei dem eine Fresnellinse zur Anwendung kommt;
- Figur 3: einen Schnitt durch einen erfindungsgemäßen Regensensor;
- Figur 4: einen Schnitt durch einen erfindungsgemäßen Regensensor, der eine plankonvexe Linse aufweist;
- Figur 5: einen Schnitt durch einen erfindungsgemäßen Regensensor, der eine plankonvexe Linse mit einer Reflexionsfläche aufweist;
- Figur 6: eine Ausführungsform der Erfindung, in der die Blende mit ihren Lamellen in dem Material der Zwischenschicht des Regensensors integriert ist;
- Figur 7: und
- Figur 8: Varianten der Integration der Lamellen in die Zwischenschicht in Verbindung mit einer plankonvexen Linse bzw. einer plankonvexen Linse mit einer Reflexionsfläche;
- Figur 9: bis
- Figur 14: Varianten der Erfindung, bei denen das erfindungsgemäße Konzept auf der Sendeseite der Anordnung verwirklicht ist.

### Beschreibung von Ausführungsbeispielen

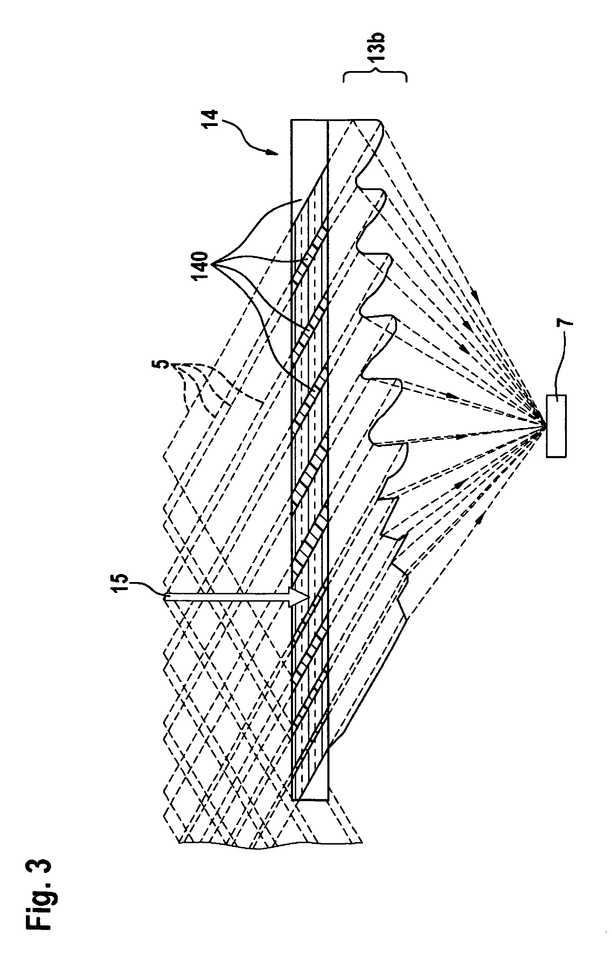

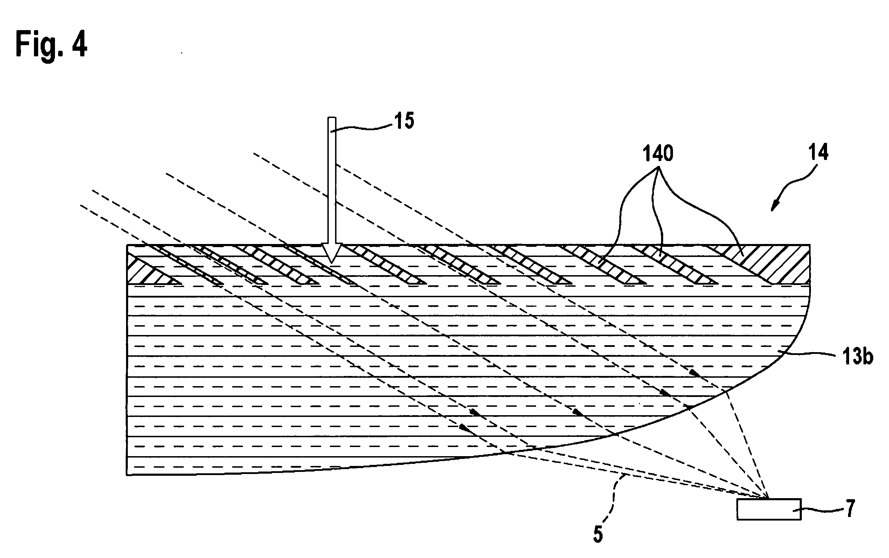

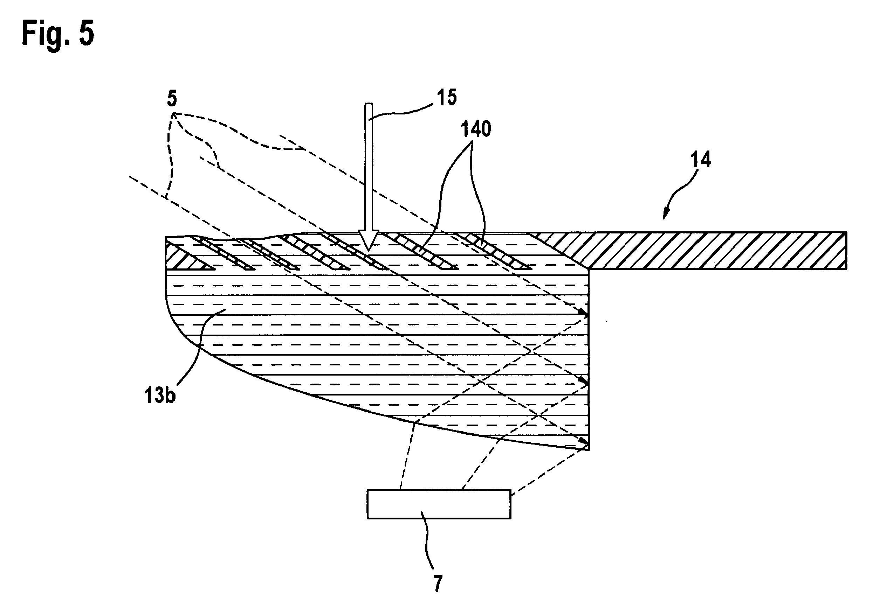

Figur 3 zeigt einen Schnitt durch einen erfindungsgemäßen Regensensor mit einer Blende 14 aus optisch intransparentem Material auf der dem Empfänger 7 zugeordneten Seite der Optik. Aus Figur 3 geht hervor, dass die einzelnen Lamellen 140 der Blende 14 im wesentlichen parallel zur Richtung der reflektierten Strahlung 5 ausgerichtet sind, so dass die reflektierte Strahlung 5 weitgehend unbeeinflusst von der Blende 14 zum Empfänger 7 gelangen kann. Strahlen, die in einer von der Nutzlichtrichtung, also der Richtung der reflektierten Strahlung 5 abweichenden Richtung, einfallen, werden durch die Geometrie der Lamellen 140 am Durchtritt auf den Empfänger 7 gehindert. Die Einfallsrichtung dieser - störenden - Strahlung ist mit dem Pfeil 15 angedeutet. Dies wird wie in der Figur 3 gezeigt dadurch gewährleistet, dass sich die Lamellen 140 aus der Pfeilrichtung 15 und damit aus der Störlichtrichtung gesehen zumindest teilweise überdecken. Um eine möglichst effiziente Wirkung der Blende 14 zu gewährleisten, ist es vorteilhaft, die Überlappungsbereiche in derjenigen Ebene, die senkrecht auf der Nutzlichtrichtung steht, möglichst groß zu wählen. Dies führt zu in Richtung der reflektierten Strahlung 5 möglichst langen Lamellen mit möglichst geringem Abstand. Dabei kann der Verlust an reflektierter Strahlung (also der Nutzstrahlung) dadurch gering gehalten werden, dass die Größe der Stirnflächen der Lamellen 140 möglichst gering gewählt wird, mit anderen Worten also dünne Lamellen 140 verwendet werden. Darüber hinaus ist für eine Minimierung des Verlustes an reflektierter Strahlung 5 eher ein größerer Abstand der einzelnen Lamellen 140 wünschenswert, so dass für die Dimensionierung der Lamellen 140 ein sinnvoller Kompromiss gefunden werden muss. Die Geometrie der Blende kann grundsätzlich in der senkrecht zur Zeichenebene verlaufenden Richtung konstant gehalten werden, so dass sich bei verschiedenen Schnittdarstellungen dasselbe Querschnittsprofil der Blende 14 ergeben würde. Auch eine in der senkrecht zur Zeichenebene verlaufenden Richtung variierende Struktur der einzelnen Lamellen 140 und damit der Blende 14 ist denkbar. Ferner können zur Erhöhung der mechanischen Stabilität einzelne oder auch alle Lamellen 140 miteinander durch (in Figur 3 nicht dargestellte) Stege verbunden sein. Die in Figur 3 dargestellte Fresnel-Linse als Auskoppeloptik 13b zur Ablenkung des reflektierten Strahls 5 ist nur als eine exemplarische Möglichkeit zur Strahlformung des reflektierten Strahls 5 zu betrachten. Es sind auch alternative Optikanordnungen zwischen Blende 14 und Empfänger 7 denkbar. Ein mögliches Beispiel sind plankonvexe Linsen oder plankonvexe Linsen mit Reflexionsflächen, wobei die Reflexion durch Verspiegelung oder mittels einer Totalreflexion an der Grenzfläche erzielt wird. Die entsprechenden Konzepte sind in den Figuren 4 und 5 dargestellt. Die Geometrie der einzelnen Lamellen 140 kann dabei in weiten Bereichen gewählt werden. Insbesondere ist eine Rotationssymmetrie der Lamellen 140 in der Zeichenebene denkbar, ferner können die Lamellen 140 unterschiedliche Abstände zueinander aufweisen und ebenso unterschiedliche Dicken zeigen; auch die Ausbildung einer Gitterstruktur kann für einzelne Anwendungen vorteilhaft sein.

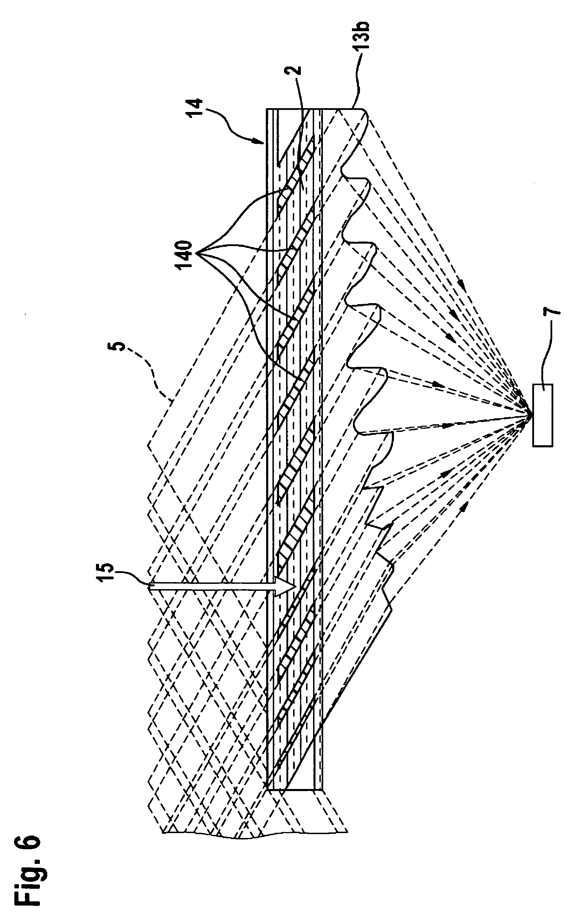

Figur 6 zeigt eine Ausführungsform der Erfindung, in der die erfindungsgemäße Blende 14 mit ihren Lamellen 140 in dem Material der Zwischenschicht 2 des Regensensors integriert ist. Diese Variante bietet die Möglichkeit, neben der optischen Wirkung der Blende 14 auch die mechanische Stabilisierungswirkung der einzelnen Blendenlamellen 140 in der beispielsweise aus einer Silikonschicht bestehenden Zwischenschicht 2 zu nutzen.

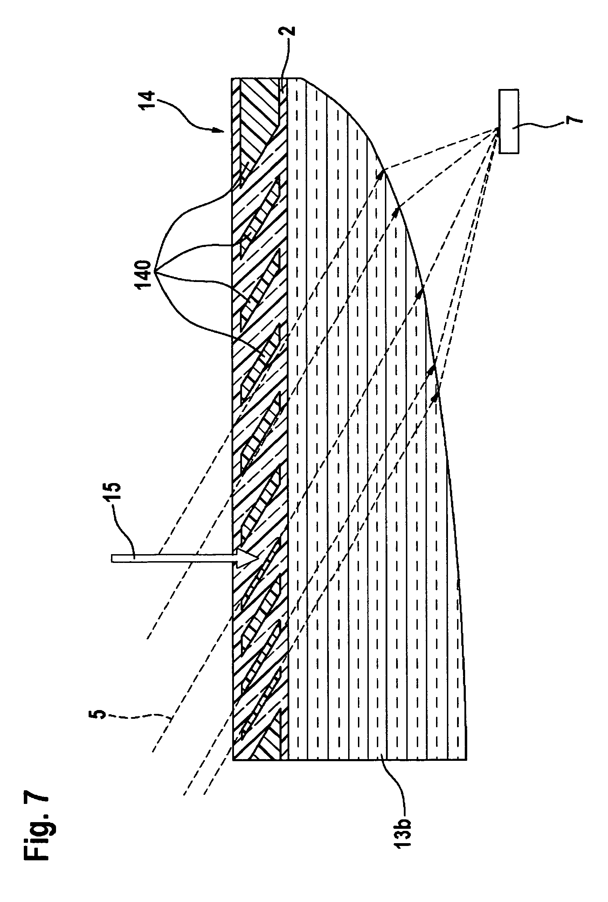

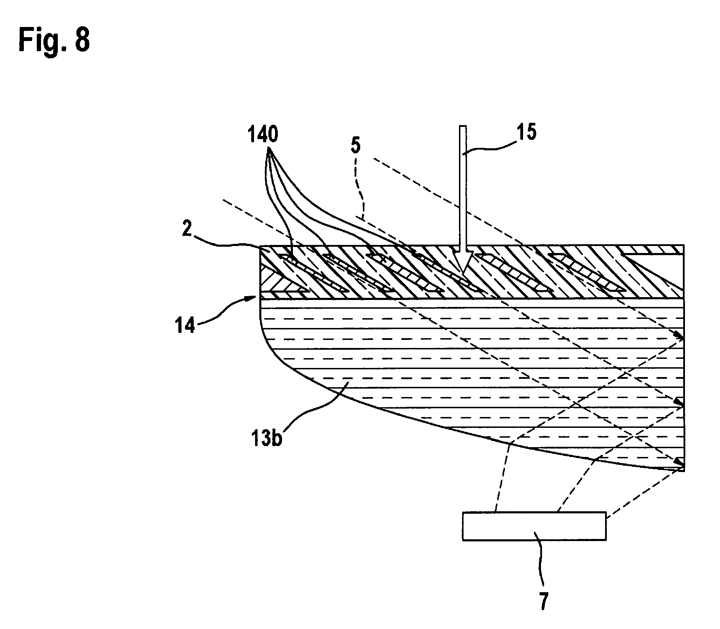

Die Figuren 7 und 8 zeigen die in Figur 6 vorgestellte Variante der Integration der Lamellen 140 in die Zwischenschicht 2 in Verbindung mit einer plankonvexen Linse bzw. einer plankonvexen Linse mit einer Reflexionsfläche als Auskoppeloptik 13b.

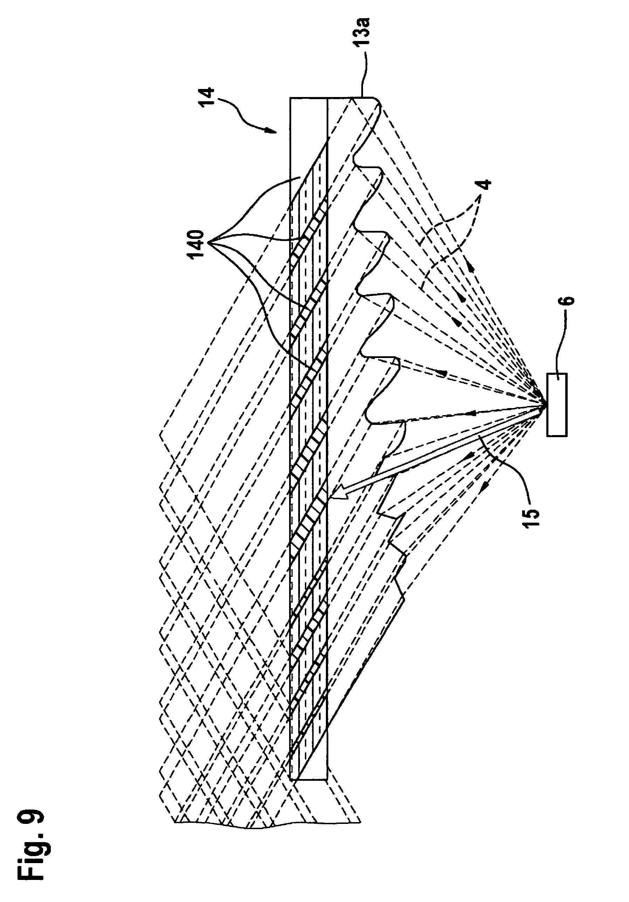

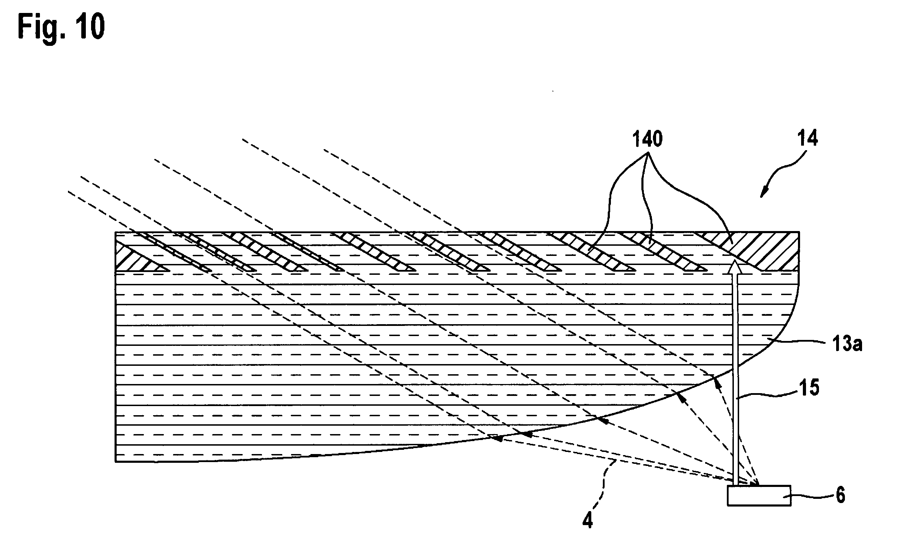

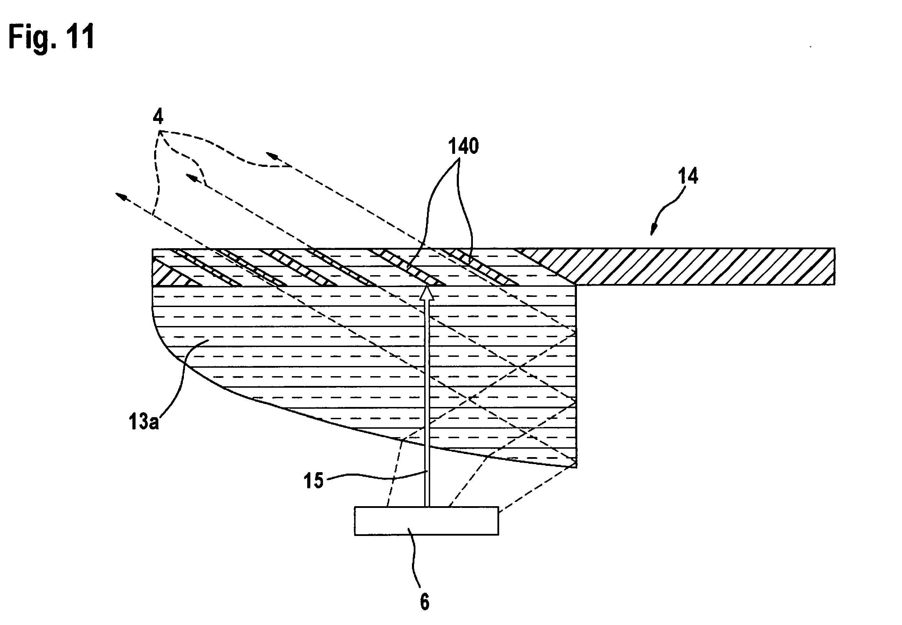

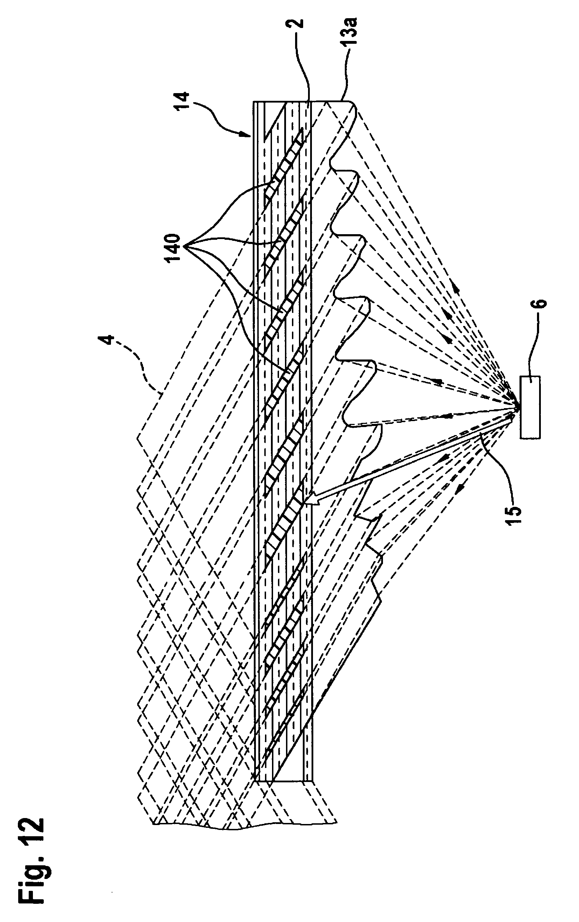

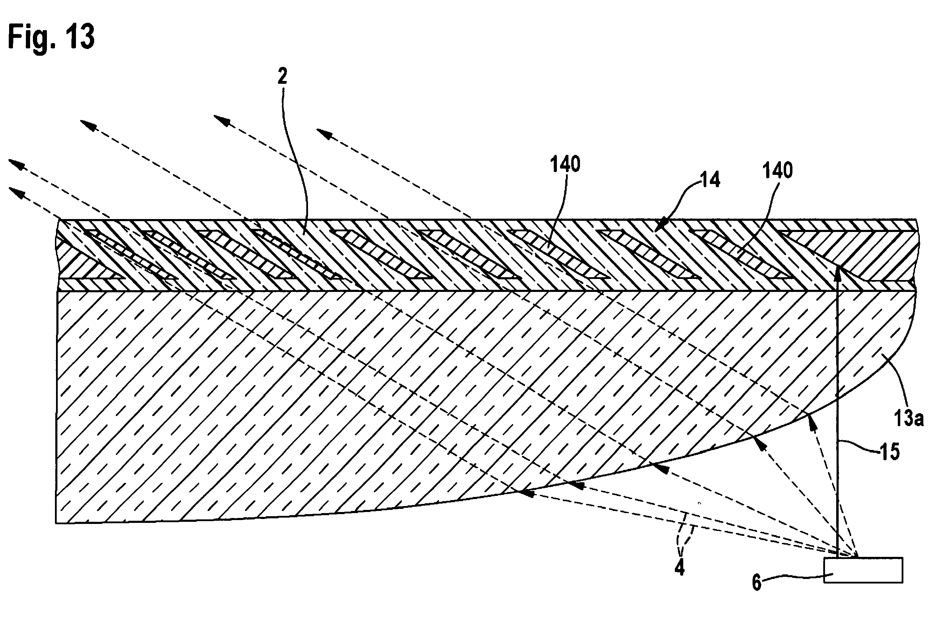

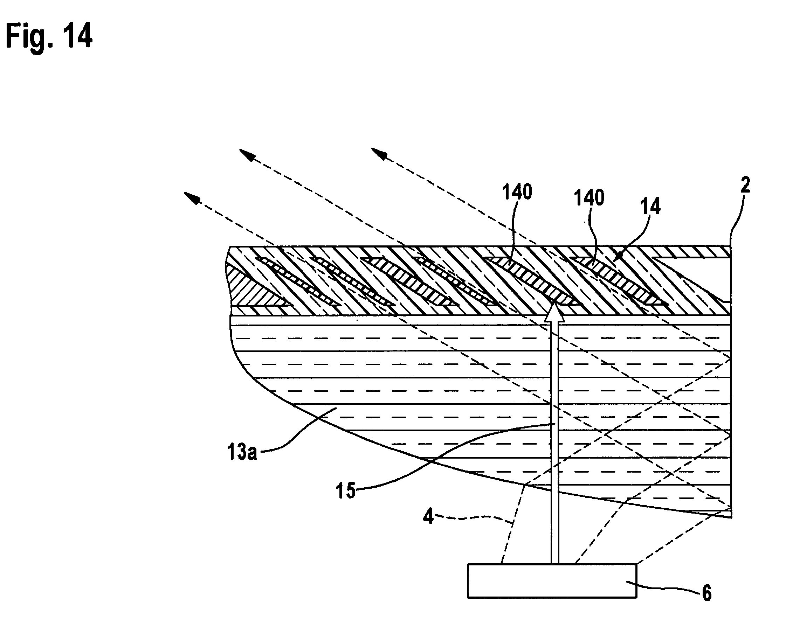

Die Figuren 9 bis 14 verdeutlichen, dass sich das der Erfindung zugrunde liegende Konzept auch auf der Sendeseite der erfindungsgemäßen Anordnung realisieren lässt. Durch die Anordnung der Blende 14 auf der Seite der Strahlungsquelle 6 wird die von der Strahlungsquelle ausgesendete Strahlung 4 bereits schon so vorkonditioniert, dass Ausbreitungen bzw. Reflexionen oder Streuung in unerwünschte, weil störende Richtungen bereits bei der Emission der optischen Nutzstrahlung ausgeblendet werden. Die in den Figuren 3 bis 8 und 9 bis 14 gezeigten Konzepte können jeweils miteinander kombiniert werden.

Abhängig davon, ob die Blende 14 und die Lamellen 140 in die Zwischenschicht 2 integriert sind oder nicht, ergeben sich zwei unterschiedliche Fertigungsverfahren für den erfindungsgemäßen Regensensor:
In den Fällen, in denen die Blende 14 nicht in die Zwischenschicht 2 integriert ist, wird zunächst die Auskoppel- bzw. Einkoppeloptik 13a bzw. 13b (nachfolgend vereinfachend als "Optik" bezeichnet) beispielsweise mittels eines Spritzgießverfahrens aus einem thermoplastischen Werkstoff hergestellt. Die Optik weist an den Stellen, an denen nachfolgend die zur Blende gehörenden Lamellen eingebracht werden sollen, entsprechend geformte Aussparungen auf. Die erfindungsgemäße Blende wird nachfolgend mittels eines weiteren Spritzgießverfahrens aus einem thermoplasten oder elastischen Material, wie beispielsweise gefärbtem Silikon, in die Aussparungen der Optik eingespritzt. Es ist auch denkbar, die Abfolge des Fertigens der Optik und der Blende zu vertauschen.

Ferner können auch die Optik und die Blende separat ebenfalls beispielsweise mittels eines Spritzgießverfahrens aus einem thermoplastischen Werkstoff hergestellt und anschließend ineinander eingeschoben werden. Die erfindungsgemäße Anordnung kann mittels eines optisch transparenten Klebers dann direkt aus dem Innenraum eines Fahrzeugs auf eine Scheibe geklebt werden. Alternativ kann in einem zusätzlichen Schritt eine Zwischenschicht aus einem Koppelmedium aus elastischem, optisch transparenten Material, wie beispielsweise Silikon, auf die Optik aufgespritzt, geklebt oder mechanisch, beispielsweise durch Klammern, fixiert werden. Für den Fall, dass für die Optik Verspiegelungsschichten angebracht werden sollen, kann dies als weiterer Schritt an einem geeigneten Punkt im Laufe der vorstehend geschilderten Fertigungsverfahrens vorgenommen werden.

Für den Fall, in dem die Lamellen der Blende in die Zwischenschicht 2 integriert werden sollen, kann zunächst die Optik wie oben geschildert mittels eines Spritzgießverfahrens hergestellt werden. Nachfolgend kann die Blende mittels eines weiteren Spritzgießverfahrens auf die Optik aufgespritzt und anschließend mittels des Materials der Zwischenschicht 2 umspritzt werden. Es ist auch denkbar, die beiden genannten Prozessschritte zeitlich zu vertauschen. Ferner ist es denkbar, die Optik und die Zwischenschicht 2 mit der integrierten Blende 14 separat voneinander, beispielsweise ebenfalls wieder mittels eines Spritzgießverfahrens, herzustellen. Nachfolgend werden die umspritzten Blenden auf der Optik fixiert, was beispielsweise mittels Verclipsen oder Klebens mit einem optisch transparenten Kleber erfolgen kann. Es ist auch denkbar, die Zwischenschicht 2 mit der integrierten Blende 14 mit der Optik mittels eines Klebers, der keine besonderen optischen Eigenschaften ausweisen muss, lediglich m Randbereich der Anordnung, der nicht von Nutzstrahlung durchtreten wird, zu fixieren. Auch in diesem Fall kann eine Verspiegelung an einem geeigneten Prozesspunkt des Herstellungsprozesses vorgenommen werden.

## Patentansprüche

1. Optische Regensensorvorrichtung für ein Kraftfahrzeug mit einer Einkoppeloptik (13a), wenigstens einer elektromagnetischen Strahlungsquelle (6) und wenigstens einer Empfangseinrichtung (7), mittels welcher eine von der wenigstens einen Strahlungsquelle (6) emittierte elektromagnetische Nutzstrahlung (4,5) empfangbar ist, wobei die elektromagnetische Nutzstrahlung (4,5) von der wenigstens einen Strahlungsquelle (6) an eine Außenfläche (10) einer Fahrzeugscheibe (1) geleitet, dort reflektiert und weiter auf die wenigstens eine Empfangseinrichtung (7) geleitet werden kann wobei eine Blende (14) im Weg der Nutzstrahlung (4,5) von der Strahlungsquelle (6) zur Empfangseinrichtung (7) in der Weise angeordnet ist, dass die Empfangseinrichtung (7) nahezu ausschließlich von Nutzstrahlung (4,5) erreicht werden kann, die nach dem Eintritt in die Fahrzeugscheibe (1) an der Außenfläche (10) in Richtung der Empfangseinrichtung (7) reflektiert werden kann, **dadurch gekennzeichnet, dass** die optische Regensensorvorrichtung eine Auskoppeloptik (13b) aufweist, wobei die Auskoppeloptik (13b) zwischen der Blende und der Empfangseinrichtung (7) angeordnet ist.

2. Optische Regensensorvorrichtung nach Anspruch 1, **dadurch gekennzeichnet, dass** die mindestens eine Blende (14) aus einer Mehrzahl von Blendenlamellen (140) aus optisch intransparentem Material gebildet ist.

3. Optische Regensensorvorrichtung nach Anspruch 2, **dadurch gekennzeichnet, dass** die Oberflächen der Blendenlamellen (140) parallel zur Richtung der optischen Nutzstrahlung (4,5) ausgerichtet sind.

4. Optische Regensensorvorrichtung nach Anspruch 3, **dadurch gekennzeichnet, dass** sich die Blendenlamellen (140) in einem von der Richtung der Nutzstrahlung (4,5) abweichenden Richtung wenigstens teilweise überdecken.

5. Optische Regensensorvorrichtung nach Anspruch 3 oder 4, **dadurch gekennzeichnet, dass** die Blendenlamellen (140) miteinander durch Stege verbunden sind.

6. Optische Regensensorvorrichtung nach einem der Ansprüche 1 bis 5, **dadurch gekennzeichnet, dass** die Blende (14) senkrecht zur Richtung der Nutzstrahlung (4,5) und parallel zur Außenfläche (10) eine variierende Querschnittsgeometrie zeigt.

7. Optische Regensensorvorrichtung nach einem der vorangehenden Ansprüche 1 bis 5, **dadurch gekennzeichnet, dass** die Blende (14) senkrecht zur Richtung der Nutzstrahlung (4,5) und parallel zur Außenfläche (10) eine konstante Querschnittsgeometrie zeigt.

8. Optische Regensensorvorrichtung nach einem der Ansprüche 1 bis 7, **dadurch gekennzeichnet, dass** eine Zwischenschicht aus einem Koppelmedium an der Einkoppeloptik und der Auskoppeloptik fixiert ist, wobei die Blende (14) in eine Zwischenschicht (2) aus einem optischen Koppelmedium integriert ist.

9. Optische Regensensorvorrichtung nach einem der Ansprüche 1 bis 8, **dadurch gekennzeichnet, dass** die Blende (14) lediglich in dem Bereich der Regensensorvorrichtung angeordnet ist, der von reflektierter Strahlung (5) durchtreten wird.

10. Optische Regensensorvorrichtung nach einem der Ansprüche 1 bis 8, **dadurch gekennzeichnet, dass** die Blende (14) lediglich in dem Bereich der Regensensorvorrichtung angeordnet ist, der von emittierter Strahlung (4) durchtreten wird.

## Claims

1. Optical rain sensor apparatus for a motor vehicle having an input coupling optics (13a), at least one electromagnetic radiation source (6) and at least one receiving device (7), which can be used to receive electromagnetic used radiation (4, 5) emitted by the at least one radiation source (6), wherein the electromagnetic used radiation (4, 5) can be guided from the at least one radiation source (6) to an outer surface (10) of a vehicle pane (1), reflected there and be guided further to the at least one receiving device (7), wherein a screen (14) is arranged in the path of the used radiation (4, 5) from the radiation source (6) to the receiving device (7) in a manner such that the receiving device (7) can be reached nearly exclusively by used radiation (4, 5) that, after entry into the vehicle pane (1), can be reflected at the outer surface (10) in the direction of the receiving device (7), **characterized in that** the optical rain sensor apparatus has an output coupling optics (13b), wherein the output coupling optics (13b) is arranged between the screen and the receiving device (7).

2. Optical rain sensor apparatus according to Claim 2, **characterized in that** the at least one screen (14) is formed by a plurality of screen blades (140) made of an optically non-transparent material.

3. Optical rain sensor apparatus according to Claim 2, **characterized in that** the surfaces of the screen blades (140) are aligned parallel to the direction of the optical used radiation (4, 5).

4. Optical rain sensor apparatus according to Claim 3, **characterized in that** the screen blades (140) at least partially cover each other in a direction that differs from the direction of the used radiation (4, 5).

5. Optical rain sensor apparatus according to Claim 3 or 4, **characterized in that** the screen blades (140) are interconnected by way of webs.

6. Optical rain sensor apparatus according to one of Claims 1 to 5, **characterized in that** the screen (14) has a varying cross-section geometry perpendicular to the direction of the used radiation (4, 5) and parallel to the outer surface (10).

7. Optical rain sensor apparatus according to one of Claims 1 to 5, **characterized in that** the screen (14) has a constant cross-section geometry perpendicular to the direction of the used radiation (4, 5) and parallel to the outer surface (10).

8. Optical rain sensor apparatus according to one of Claims 1 to 7, **characterized in that** an intermediate layer made of a coupling medium is fixed to the input coupling optics and the output coupling optics, wherein the screen (14) is integrated in an intermediate layer (2) made of an optical coupling medium.

9. Optical rain sensor apparatus according to one of Claims 1 to 8, **characterized in that** the screen (14) is arranged only **in that** region of the rain sensor apparatus through which reflected radiation (5) passes.

10. Optical rain sensor apparatus according to one of Claims 1 to 8, **characterized in that** the screen (14) is arranged only **in that** region of the rain sensor apparatus through which emitted radiation (4) passes.

## Revendications

1. Dispositif optique de détection de pluie pour un véhicule automobile, comprenant une optique d'injection (13a), au moins une source de rayonnement électromagnétique (6) et au moins un dispositif de réception (7) au moyen duquel peut être réceptionné un rayonnement électromagnétique utile (4, 5) émis par l'au moins une source de rayonnement (6), le rayonnement électromagnétique utile (4, 5) pouvant être guidé par l'au moins une source de rayonnement (6) sur une surface extérieure (10) d'une vitre de véhicule (1), y être réfléchi et être retransmis sur l'au moins un dispositif de réception (7), un obturateur (14) étant disposé dans le trajet du rayonnement utile (4, 5) entre la source de rayonnement (6) et le dispositif de réception (7) de telle sorte que le dispositif de réception (7) ne peut presque exclusivement être atteint que par le rayonnement utile (4, 5) qui, après l'entrée dans la vitre de véhicule (1), peut être réfléchi sur la surface extérieure (10) en direction du dispositif de réception (7), **caractérisé en ce que** le dispositif optique de détection de pluie présente une optique de découplage (13b), l'optique de découplage (13b) étant disposée entre l'obturateur et le dispositif de réception (7).

2. Dispositif optique de détection de pluie selon la revendication 1, **caractérisé en ce que** l'au moins un obturateur (14) est constitué d'une pluralité de lamelles d'obturation (140) en un matériau optiquement non transparent.

3. Dispositif optique de détection de pluie selon la revendication 2, **caractérisé en ce que** les surfaces des lamelles d'obturation (140) sont orientées parallèlement à la direction du rayonnement optique utile (4, 5).

4. Dispositif optique de détection de pluie selon la revendication 3, **caractérisé en ce que** les lamelles d'obturation (140) se chevauchent au moins partiellement dans une direction différente de la direction du rayonnement utile (4, 5).

5. Dispositif optique de détection de pluie selon la revendication 3 ou 4, **caractérisé en ce que** les lamelles d'obturation (140) sont reliées entre elles par des barrettes.

6. Dispositif optique de détection de pluie selon l'une des revendications 1 à 5, **caractérisé en ce que** l'obturateur (14) présente une forme géométrique de section transversale différente perpendiculairement à la direction du rayonnement utile (4, 5) et parallèlement à la surface extérieure (10).

7. Dispositif optique de détection de pluie selon l'une des revendications 1 à 5, **caractérisé en ce que** l'obturateur (14) présente une forme géométrique de section transversale constante perpendiculairement à la direction du rayonnement utile (4, 5) et parallèlement à la surface extérieure (10).

8. Dispositif optique de détection de pluie selon l'une des revendications 1 à 7, **caractérisé en ce qu'**une couche intermédiaire en un fluide de couplage est fixé à l'optique d'injection et à l'optique de découplage, l'obturateur (14) étant intégré dans une couche intermédiaire (2) en un fluide de couplage optique.

9. Dispositif optique de détection de pluie selon l'une des revendications 1 à 8, **caractérisé en ce que** l'obturateur (14) est uniquement disposé dans la zone du dispositif de détection de pluie qui est traversée par le rayonnement réfléchi (5).

10. Dispositif optique de détection de pluie selon l'une des revendications 1 à 8, **caractérisé en ce que** l'obturateur (14) est uniquement disposé dans la zone du dispositif de détection de pluie qui est traversée par le rayonnement émis (4).
